# EUROPEAN PATENT SPECIFICATION

(11) **EP 0 559 261 B1**
(45) Date of publication and mention of the grant of the patent: **22.05.1996**
(21) Application number: 93200414.6
(22) Date of filing: 15.02.1993
(51) Int. Cl.: B60Q 3/04, G01D 11/24, F16B 21/02

(54) **Illuminated display apparatus**
Beleuchtete Anzeigevorrichtung
Dispositif d'affichage illuminé

(30) Priority: 04.03.1992 US 845974
(43) Date of publication of application: 08.09.1993
(60) Divisional application: 95201605.3
(73) Proprietor: DELCO ELECTRONICS CORPORATION, Kokomo Indiana 46902 (US)
(72) Inventor: Scott, Stephen Daniel, Fenton, MI 48430 (US)
(74) Representative: Denton, Michael John

(56) References cited:
- EP-A- 0 006 361
- EP-A- 0 409 347
- DE-A- 2 323 944
- US-A- 4 029 953
- RESEARCH DISCLOSURE no. 181, May 1979, page 209 J.M. MORIARTY '18108 Motor mount'

## Description

This invention relates to display apparatus in which a gauge is mounted on a light pipe.

Many motor vehicles contain one or more gauge displays used for conveying information to the driver. In some of these gauge displays, the display is backlit, so that light supplied typically from behind the display travels through translucent graphics portions of the display enabling the graphics portions to emit light.

One known method of back-lighting displays uses light wave-guides, known as light pipes, which are typically constructed of transparent plastics material. If a vehicle instrument cluster includes air core gauges and requires extensive light piping adequately to back-light the display, the gauges are typically mounted to a case housing or a circuit board with a light pipe placed in front of the gauge. In such methods, several additional fasteners may be necessary to achieve the mounting of the air core gauges, with some systems requiring numerous additional fasteners for each individual gauge. An example is shown in EP-A-0006361.

These above mentioned additional fasteners add cost to display systems because each additional fastener is another part that must be purchased.

The present invention seeks to provide improved display apparatus.

According to an aspect of the present invention, there is provided display apparatus as specified in claim 1.

These arrangements can, decrease the cost of the construction of displays and increase the speed of assembly of the display.

This invention can provide a method and apparatus for mounting gauges in displays that eliminates the need for additional fasteners formerly necessary for the mounting of displays. By eliminating additional fasteners, displays may be manufactured at a lower cost and assembled with greater ease.

A preferred embodiment comprises (i) a gauge means including a feature means for contacting a mount means and (ii) a light pipe into which is integrally molded the mount means for contacting the feature means in a secure manner thereby holding the gauge means in place without requiring additional fasteners.

Advantageously, the apparatus of this embodiment may be assembled in a simplified manner by placing the feature means of the gauge means in contact with the mount means in the light pipe and engaging the feature means with the mount means whereby the gauge means is securely fastened into the display.

An embodiment of the present invention is described below, by way of example only, with reference to the accompanying drawings, in which:
Figure 1 is a side elevational view of an embodiment of apparatus for mounting an air core gauge to a light pipe;
Figure 2 is a plan view of the light pipe of Figure 1;
Figure 3 is a cross-sectional view of the light pipe of Figure 1, taken along line 3-3 of Figure 2;
Figure 4 is a cross-sectional view of the light pipe of Figure 1, taken along line 4-4 of Figure 2; and
Figure 5 is a side elevational view of the apparatus of Figure 1 showing the air core gauge mounted on the light pipe.

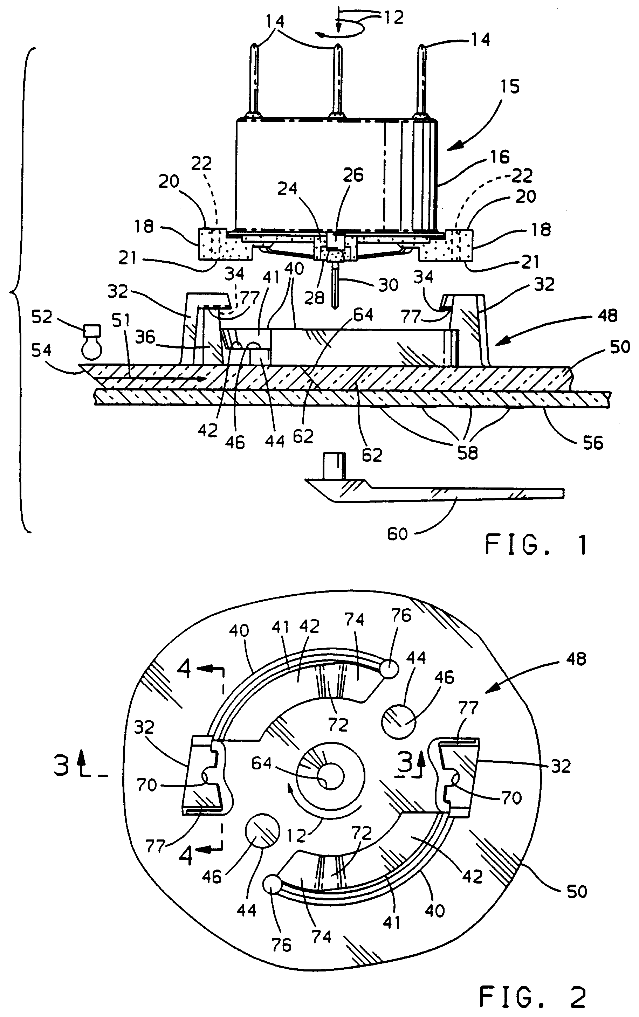

Referring to Figure 1, the gauge 15 shown is a typical air core gauge (or equivalent) constructed within an aluminium shell 16. Within the aluminium shell 16 is included a bobbin (not shown) around which coils are wound. The coils surround a magnetic rotor which rotates in response to magnetic flux caused by energization of the coils, thereby rotating spindle 30 to which a pointer 60 is fastened.

In the example shown, there are moulded to the bobbin two primary ears 18 and two secondary ears 24 (only one shown). The primary and secondary ears 18 and 24 hold the bobbin in place within shell 16 with the aid of metal tabs 26 crimped around secondary ears 24. The primary and secondary ears 18 and 24 provide surfaces 28 and 20 for contacting components of the light pipe 48 to hold securely the gauge 15 in place.

The light pipe 48 has a light transmitting member 50 and, integrally moulded therein, a mount 32,40. The mount 32,40 has surfaces 34 and 74 for contacting the surfaces 20 and 28 of the ears 18,24 to hold the gauge securely in place, without the need for additional fasteners.

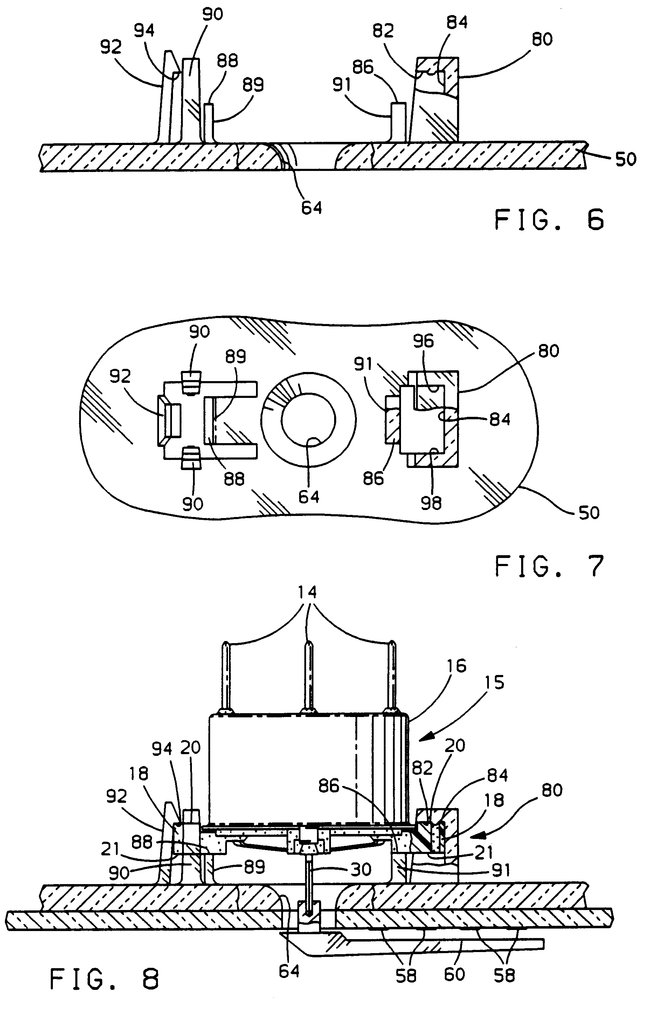

More particularly, in the embodiment shown in Figures 1 to 5, the gauge 15 is secured to the light pipe 48 by placing the gauge in contact with the mount 32,40 and then twisting, as shown by arrows 12. When the gauge 15 is first placed in the mount, the surfaces 21 of primary ears 18 are placed on the surfaces 46 of stabilizing posts 44. The surfaces 28 of secondary ears 24 are placed on surfaces 42 of two diametrically opposed guides 40. The gauge 15 is then twisted relative to the light pipe 48 in the direction of arrow 12 (see Figure 2). When the gauge 15 is twisted, the surface 28 of secondary ears 24 rides along slide surfaces 42 of guides 40. The surfaces 41 of guides 40 retain the gauge 15 in position during the twist process.

As the gauge 15 is twisted, primary ears 18 rotate into diametrically opposed retainers 32. As primary ears 18 rotate into retainers 32, surfaces 28 of secondary ears 24 slide up ramps 72 in guides 40 and come to rest on friction surfaces 74 of guides 40. The friction surfaces 74 and underside surfaces 34 of the mount means apply opposing forces on surfaces 20 and 28 of the ears 18,24 to provide a friction fit of the gauge 15 on the light pipe 48. The friction fit between the mount and the ears 18,24 is aided by ramps 72 as follows. Slide surfaces 42 are at a greater perpendicular distance from underside surfaces 34 than the perpendicular distance between surfaces 28 and 20. The ramps 72 provide a gradual change between slide surfaces 42 and friction surfaces 74, friction surfaces 74 being at a slightly smaller perpendicular distance from underside surfaces 34 than the perpendicular distance between surfaces 28 and 20. When the feature means is engaged to the mount, the perpendicular proximity between friction surfaces 74 and underside surfaces 34 cause slight strain on the gauge bobbin through the primary and secondary ears 18 and 24, thereby to provide the friction fit holding the gauge 15 in place.

Posts 76 in guides 40 and surfaces 36 in retainers 32 act as stops for the primary and secondary ears 18 and 24 to prevent the gauge 15 from being twisted too far. Ribs 77 located on the underside surface 34 of each retainer 32 provide the friction fit with the surfaces 20 of the ears 18. Once the ears 18 are engaged in the retainers 32, ribs 77 prevent the gauge 15 from rotating back out of the mount from vibration or other such forces.

In the event that part of the mount does not function properly to hold the gauge in place, two slots 70 may be placed in the tops of retainers 32. The slots 70 are aligned with holes 22 in primary ears 18 when the ears are properly engaged with the mount. As a back-up attachment, two screws (not shown) may be driven through slots 70 and into holes 22 to hold the gauge in place. This, however, is not normally necessary.

Mounted on the front surface of the light transmitting member 50 of the light pipe 48 is a generally translucent sheet 56, parts of which may be masked and filtered with applique graphic symbols 58 forming part of a gauge display.

When the gauge 15 is mounted in the assembly, the spindle 30 is inserted through hole 64 in the light pipe 48 and through a hole (not shown) in the translucent sheet 56. A pointer 60 is attached to spindle 30 at the front of the display, so that pointer 60 moves along the graphic symbols 58 as the spindle 30 is rotated by the gauge 15.

In the backlit display shown, light is provided by a light source 52, such as one or more incandescent bulbs. Light rays 51 may be transmitted into the light transmitting member 50 and reflected off a surface 54 within light transmitting member 50 so as to travel along the member. Around hole 64, reflecting surfaces 62 reflect the light rays 51 towards the pointer 60. The pointer 60 receives the light and has internal surfaces which reflect the light so that the pointer appears lit to a viewer. Various other reflecting surfaces may be molded into the light pipe 48 so that the light rays are reflected to other parts of the display which then appear lit. Such implementations are well known to those skilled in the art and will not be set forth in further detail herein.

In the above described embodiment, the gauge 15 is placed in the mount, and twisted relative to the mount to engage the friction fit between the ears 18,24 and the mount which secures the gauge 15 to the light pipe 48, thereby mounting the gauge 15 in the display.

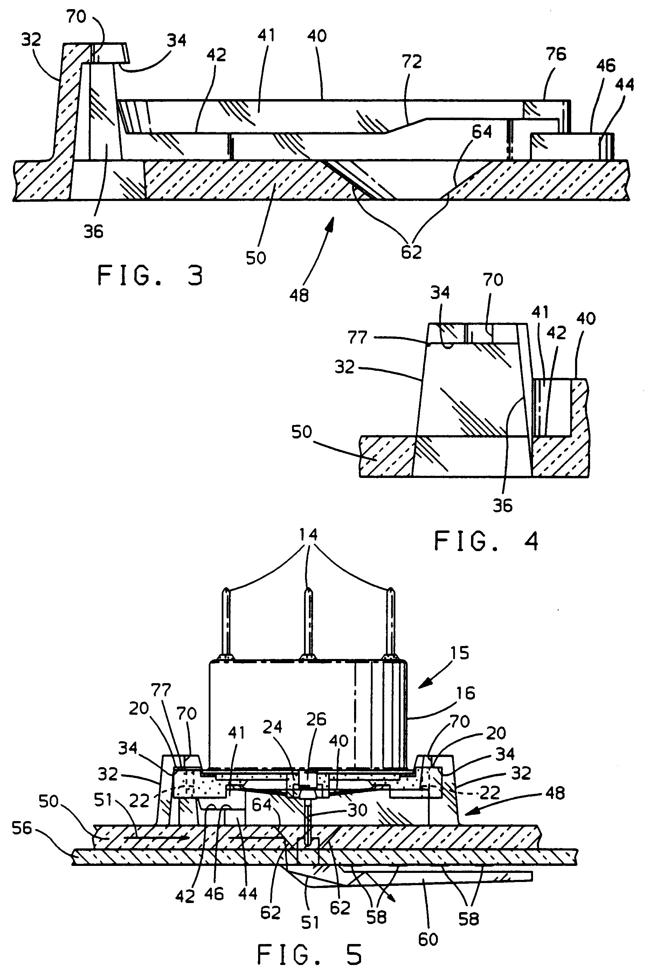

The above embodiment may be used and the completed assembly may be mounted in a housing (not shown), which is typically moulded from a plastics material. The housing may be provided with a clear cover of plastics material to keep dust out of the display. The entire display may then be installed into a motor vehicle. Electrical connections are made with terminals 14 of gauge 15, through which power is supplied to the display, in a known manner. Methods of mounting assemblies like the type shown in Figure 4 into housings and then into motor vehicles are well known to those skilled in the art.

## Claims

1. Display apparatus comprising a gauge (15) including securing means (18,24) which includes a first set of surfaces (20,28); and a light pipe (48) including integrally moulded therewith a mount (32,40), the mount including a second set of surfaces (34,74), the first and second sets of surfaces cooperating in use to form a friction fit between the gauge and the mount to secure the gauge relative to the light pipe.

2. Display apparatus according to claim 1, wherein the mount (32,40) comprises first and second guides (40) which include first and second slide surfaces (42,40), first and second ramps (72) and first and second friction surfaces (74), and first and second retainers (32) each including an engagement surface (34) substantially facing the friction surfaces (74); the gauge comprising first and second sets of ears (18,24), in use the second set of ears being placed in contact with the slide surfaces such that rotation of the gauge relative to the light pipe causes the first set of ears to rotate into the retainers and the second set of ears to slide along the ramps and to come to rest on the friction surfaces, a friction fit occurring between the engagement surfaces and the first set of ears and between the friction surfaces and the second set of ears.

3. Display apparatus according to claim 2, comprising a set of stabilising posts (44) in use adapted to contact the first set of ears before rotation of the gauge to stablise the gauge with respect to the light pipe.

4. Display apparatus according to claim 2 or 3, wherein each retainer comprises a stop against which in use one of the first set of ears abuts when the gauge is engaged to the mount.

5. Display apparatus according to claim 2, 3 or 4, wherein each guide comprises a stop against which in use the second set of ears abuts when the gauge is engaged to the mount.

6. Display apparatus according to any one of claims 2 to 5, wherein the ears of the first set of ears are substantially diametrically opposed to one another relative to the casing of the gauge.

7. Display apparatus according to any one of claims 2 to 6, wherein the ears of the second set of ears are substantially diametrically opposed to one another relative to the casing of the gauge.

## Patentansprüche

1. Anzeigevorrichtung, die umfaßt ein Anzeigeelement (15), das Befestigungsmittel (18, 24) enthält, die einen ersten Satz von Oberflächen (20, 28) enthalten; und einen Lichtleiter (48), der eine integral darin geformte Befestigung (32, 40) enthält, wobei die Befestigung einen zweiten Satz von Oberflächen (34, 74) enthält, wobei die ersten und zweiten Sätze von Oberflächen im Gebrauch zusammenwirken, um eine Reibpassung zwischen dem Anzeigeelement und der Befestigung zu bilden, um das Anzeigeelement relativ zu dem Lichtleiter zu befestigen.

2. Anzeigevorrichtung nach Anspruch 1, in der die Befestigung (32, 40) umfaßt erste und zweite Führungen (40), die erste und zweite Gleitoberflächen (42, 40), erste und zweite Rampen (72) und erste und zweite Reiboberflächen (74) enthalten, und erste und zweite Rückhalteelemente (32), von denen ein jedes eine Eingriffsoberfläche (34) enthält, die im wesentlichen den Reiboberflächen (74) zugewandt ist; wobei das Anzeigeelement erste und zweite Sätze von Ohren (18, 24) umfaßt, der zweite Satz von Ohren im Gebrauch derart in Kontakt mit den Gleitoberflächen gebracht wird, daß eine Drehung des Anzeigeelementes relativ zu dem Lichtleiter bewirkt, daß der erste Satz von Ohren sich in die Rückhalteelemente dreht und der zweite Satz von Ohren entlang der Rampen gleitet und auf den Reiboberflächen zur Ruhe kommt, wobei eine Reibpassung zwischen den Eingriffsoberflächen und dem ersten Satz von Ohren und zwischen den Reiboberflächen und dem zweiten Satz von Ohren eintritt.

3. Anzeigevorrichtung nach Anspruch 2, die einen Satz von Stabilisierungsständern (44) umfaßt, die im Gebrauch ausgelegt sind, den ersten Satz von Ohren vor der Drehung des Anzeigeelements zu kontaktieren, um das Anzeigeelement bezüglich des Lichtleiters zu stabilisieren.

4. Anzeigevorrichtung nach Anspruch 2 oder Anspruch 3, in der jedes Rückhalteelement einen Anschlag umfaßt, gegen den im Gebrauch eines der Ohren von dem ersten Satz von Ohren anliegt, wenn das Anzeigeelement mit der Befestigung im Eingriff ist.

5. Anzeigevorrichtung nach Anspruch 2, 3 oder 4, in der jede Führung einen Anschlag umfaßt, gegen den im Gebrauch der zweite Satz von Ohren anliegt, wenn das Anzeigeelement mit der Befestigung im Eingriff steht.

6. Anzeigevorrichtung nach einem der Ansprüche 2 bis 5, in der die Ohren des ersten Satzes von Ohren relativ zu dem Gehäuse des Anzeigeelements einander im wesentlichen diametral gegenüberliegen.

7. Anzeigevorrichtung nach einem der Ansprüche 2 bis 6, in der die Ohren des zweiten Satzes von Ohren relativ zu dem Gehäuse des Anzeigeelements einander im wesentlichen diametral gegenüberliegen.

## Revendications

1. Dispositif d'affichage comprenant une jauge (15) comportant des moyens d'immobilisation (18, 24) qui comprennent un premier ensemble de surfaces (20, 28) ; et un guide de lumière (48) comportant un support (32, 40) venu de matière par moulage avec celui-ci, le support comportant un deuxième ensemble de surfaces (34, 74), les premier et deuxième ensembles de surfaces coopérant, en cours d'utilisation, de manière à établir un ajustement par frottement entre la jauge et le support pour immobiliser la jauge par rapport au guide de lumière.

2. Dispositif d'affichage selon la revendication 1, dans lequel le support (32, 40) comprend des premier et second éléments de guidage (40) qui comportent des première et seconde surfaces de glissement, des première et seconde rampes (72) et des première et seconde surfaces de frottement (74), et des premier et second éléments de retenue (32) comportant chacun une surface (34) de mise en prise sensiblement en regard des surfaces de frottement (74) ; la jauge comprenant des premier et second ensembles d'oreilles (18, 24), le deuxième ensemble d'oreilles étant situé, en cours d'utilisation, en contact avec les surfaces de glissement afin que la rotation de la jauge par rapport au guide de lumière provoque la rotation du premier ensemble d'oreilles à l'intérieur des éléments de retenue et le glissement du deuxième ensemble d'oreilles le long des rampes jusqu'à être en appui sur les surfaces de frottement, un ajustement par frottement s'établissant entre les surfaces de mise en prise et le premier ensemble d'oreilles et entre les surfaces de frottement et le second ensemble d'oreilles.

3. Dispositif d'affichage selon la revendication 2, comprenant un ensemble de montants (44) de stabilisation adaptés, en cours d'utilisation, pour être en contact avec le premier ensemble d'oreilles avant la rotation de la jauge afin de stabiliser la jauge par rapport au guide de lumière.

4. Dispositif d'affichage selon la revendication 2 ou 3, dans lequel chaque élément de retenue comprend un élément d'arrêt contre lequel, en cours d'utilisation, une oreille du premier ensemble d'oreilles est en butée lorsque la jauge est mise en prise avec le support.

5. Dispositif d'affichage selon la revendication 2, 3 ou 4, dans lequel chaque élément de guidage comprend un élément d'arrêt contre lequel, en cours d'utilisation, le second ensemble d'oreilles est en butée lorsque la jauge est mise en prise avec le support.

6. Dispositif d'affichage selon l'une quelconque des revendications 2 à 5, dans lequel les oreilles du premier ensemble d'oreilles sont sensiblement diamétralement opposées les unes aux autres par rapport au boîtier de la jauge.

7. Dispositif d'affichage selon l'une quelconque des revendications 2 à 6, dans lequel les oreilles du second ensemble d'oreilles sont sensiblement diamétralement opposées les unes aux autres par rapport au boitier de la jauge.
